# EUROPEAN PATENT SPECIFICATION

(11) **EP 2 943 836 B1**
(45) Date of publication and mention of the grant of the patent: **01.04.2020**
(21) Application number: 13871090.0
(22) Date of filing: 28.02.2013
(51) Int. Cl.: G02B 27/01, G06F 3/01, G06F 3/00, G02B 27/00

(54) **HEAD MOUNT DISPLAY DEVICE PROVIDING EYE GAZE CALIBRATION AND CONTROL METHOD THEREOF**
KOPFMONTIERTE ANZEIGEVORRICHTUNG MIT BLICKKALIBRIERUNG UND STEUERUNGSVERFAHREN DAFÜR
DISPOSITIF D'AFFICHAGE FACIAL RÉALISANT UN ÉTALONNAGE DU REGARD, ET PROCÉDÉ DE COMMANDE ASSOCIÉ

(30) Priority: 09.01.2013 KR 20130002558; 21.02.2013 US 201313772444
(43) Date of publication of application: 18.11.2015
(73) Proprietor: LG Electronics Inc., Yeongdeungpo-Gu Seoul 07336 (KR)
(72) Inventor: CHO, Eunhyung, Seoul 137-724 (KR)
(74) Representative: Plasseraud IP
(86) International application number: PCT/KR2013/001655
(87) International publication number: WO 2014/109430

(56) References cited:
- WO-A2-2012/118575
- WO-A2-2012/118575
- JP-A- 2011 180 867
- US-A1- 2006 152 434
- US-A1- 2010 053 555
- US-A1- 2011 128 364
- US-A1- 2012 323 515

## Description

### Technical Field

The present specification relates to a head mount display (HMD) device, and more particularly, to an HMD device that is capable of calibrating a user's eye gaze direction and a control method thereof.

### Background Art

A head mount display (HMD) device may be worn by a user like glasses. The user may receive digital information displayed on the HMD device. The HMD device may calibrate a user's eye gaze direction to detect which the user gazes at. The HMD device may adjust the position of the digital information displayed on the HMD device based on the user's eye gaze direction and provide the user with digital information including an adjusted display position. US2010/053555 provides a method and apparatus for tracking eye movement.

### Disclosure of Invention

### Technical Problem

In order to perform eye gaze calibration, it is necessary for the HMD device to provide an eye gaze calibration screen to the user such that the user views the eye gaze calibration screen. Also, it is necessary for the user to perform a process for eye gaze calibration before using the HMD device. As a result, it is necessary for the user to have time to perform eye gaze calibration of the HMD device, which is troublesome.

Accordingly, the present specification is directed to a head mount display (HMD) device providing eye gaze calibration and a control method thereof that substantially obviate one or more problems due to limitations and disadvantages of the related art.

An object of the present specification is to provide an eye gaze calibration method of an HMD device that does not require time to calibrate a user's eye gaze direction.

Additional advantages, objects, and features of the specification will be set forth in part in the description which follows and in part will become apparent to those having ordinary skill in the art upon examination of the following or may be learned from practice of the specification. The objectives and other advantages of the specification may be realized and attained by the structure particularly pointed out in the written de scription and daims hereof as well as the appended drawings.

### Solution to Problem

To achieve these objects and other advantages and in accordance with the purpose of the specification, as embodied and broadly described herein, an HMD device includes a camera unit to sense an image of surroundings located in front of the HMD device, an image processing unit to detect a reference object from the sensed image of surroundings, an eye gaze detection unit to detect a user's eye gaze direction in which a user gazes at the detected reference object, and a controller to perform eye gaze calibration based on the detected reference object and the detected user's eye gaze direction, wherein the image processing unit detects at least one object contained in the sensed image of surroundings as a first object, detects a hand of the user contained in the sensed image of surroundings as a second object, detects an event of the second object with respect to the first object, and decides the first object, on which the event has been detected, as the reference object.

In another aspect of the present specification, an eye gaze calibration method of an HMD device includes sensing an image of surroundings located in front of the HMD device using a camera unit, detecting a reference object from the sensed image of surroundings using an image processing unit, detecting a user's eye gaze direction in which a user gazes at the detected reference object using an eye gaze detection unit, and performing eye gaze calibration based on the detected reference object and the detected user's eye gaze direction using a controller, wherein the step of detecting the reference object includes detecting at least one object contained in the sensed image of surroundings as a first object, detecting a hand of the user contained in the sensed image of surroundings as a second object, detecting an event of the second object with respect to the first object, and deciding the first object, on which the event has been detected, as the reference object.

It is to be understood that both the foregoing general description and the following detailed description of the present specification are exemplary and explanatory and are intended to provide further explanation of the specification as claimed.

### Advantageous Effects of Invention

The HMD device may perform eye gaze calibration based on at least one of the detected reference object and the detected reference point.

According to embodiments of the present specification, it is possible for an HMD device to perform eye gaze calibration while a user uses the HMD device.

Also, according to embodiments of the present specification, it is possible for an HMD device to use a real object contained in the surroundings as a reference point for eye gaze calibration.

According to embodiments of the present specification, it is possible for an HMD device to recognize a portion of the body of a user and to use the recognized portion of the body of the user as a reference point for eye gaze calibration.

According to embodiments of the present specification, it is possible for an HMD device to use a hand of a user as a reference point for eye gaze calibration.

According to embodiments of the present specification, it is possible for an HMD device to detect an event on a real object and to use the real object as a reference point for eye gaze calibration.

According to embodiments of the present specification, it is possible for an HMD device to detect a user's eye gaze direction and to use the detected user's eye gaze direction in eye gaze calibration.

According to embodiments of the present specification, it is possible for an HMD device to measure the distance from the HMD device to a reference point and to decide depth of a virtual object displayed on the HMD device based on the measured distance from the HMD device to the reference point.

### Brief Description of Drawings

The accompanying drawings, which are included to provide a further understanding of the specification and are incorporated in and constitute a part of this application, illustrate embodiment(s) of the specification and together with the description serve to explain the principle of the specification. In the drawings:
FIG. 1 a view showing an eye gaze calibration method of a head mount display (HMD) device according to an embodiment of the present specification;
FIGs. 2(a) and 2(b) are views showing an eye gaze calibration method of an HMD device using a reference point according to an embodiment of the present specification;
FIGs. 3(a) and 3(b) are views showing examples of a reference object and a reference point according to an embodiment of the present specification;
FIGs. 4(a) and 4(b) are views showing examples of a reference object and a reference point according to another embodiment of the present specification;
FIGs. 5(a) and 5(b) are views showing a method of displaying an augmented reality message using eye gaze calibration according to an embodiment of the present specification;
FIGs. 6(a) and 6(b) are views showing a method of correcting an intersection point of the HMD device according to an embodiment of the present specification;
FIG. 7 is a block diagram showing an HMD device according to an embodiment of the present specification;
FIG. 8 is a flowchart showing an eye gaze calibration method according to an embodiment of the present specification;
FIG. 9 is a flowchart showing a method of deciding a reference object according to an embodiment of the present specification; and
FIG. 10 is a flowchart showing a method of deciding a reference object according to another embodiment of the present specification.

### Best Mode for Carrying out the Invention

Reference will now be made in detail to the preferred embodiments of the present specification, examples of which are illustrated in the accompanying drawings. It should be noted herein that these embodiments are only for illustrative purposes and the protection scope of the specification is not limited or restricted thereto.

Terms used in this specification are general terms selected in consideration of functions and widely used at the present time. However, such terms may vary depending upon intentions of those skilled in the art to which the present specification pertains, usual practices, or appearance of new technology. In a specific case, some terms may be selected by the applicant of the present application. In this case, meanings of such terms will be described in corresponding paragraphs of the specification. Therefore, it should be noted that terms used in this specification be interpreted based on real meanings of the terms and the disclosure of the present specification, not simple names of the terms.

In embodiments of the present specification, a head mount display (HMD) device may include a computer that a user wears on the head, i.e. a wearable computer. In embodiments of the present specification, a virtual object may be an object displayed on a display unit of the HMD device. For example, the HMD device may display virtual objects, such as an application icon, an alarm message, an augmented reality (AR) message, a navigation direction indicator, and a notification message, on the display unit.

Also, in embodiments of the present specification, a real object may be an object contained in the surroundings sensed by a camera unit of the HMD device. For example, the real object may include various objects contained in a visual field of a user in a state in which the use wears the HMD device. The HMD device may sense a region corresponding to the visual field of the user as an image using the camera unit. Also, the HMD device may distinguish objects contained in the sensed image using an image processing unit.

Also, in embodiments of the present specification, a reference object may be an object at which a user gazes when the HMD device calibrates a user's eye gaze direction. The reference object may be a criterion for eye gaze calibration. Also, a reference point may be a portion of the reference object. The reference point may be used to improve accuracy of eye gaze calibration.

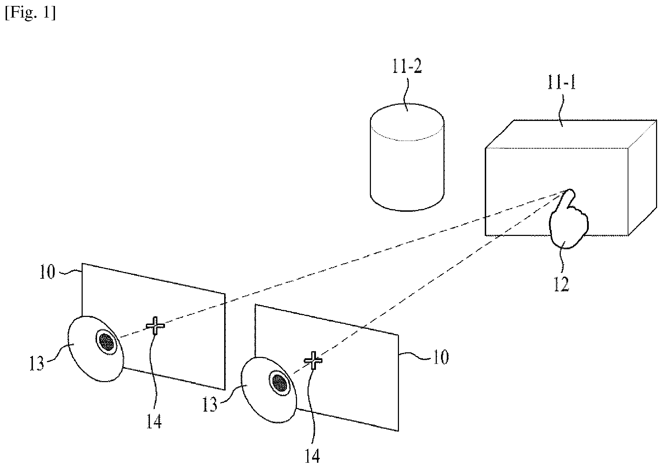

FIG. 1 is a view showing an eye gaze calibration method of an HMD device according to an embodiment of the present specification. The HMD device may detect a reference object and a user's eye gaze direction as a reference point for eye gaze calibration to perform the eye gaze calibration. According to embodiments, the HMD device may decide a reference point as the reference point instead of the reference object. The HMD device may detect at least one real object or a portion of the body of a user contained in the surroundings using an image processing unit. The HMD device may detect an event on the real object. The HMD device may detect a user's operation of controlling or instructing a real object as an event on the real object. The HMD device may decide the real object, on which the event has been detected, as a reference object of the eye gaze calibration. The HMD device may perform eye gaze calibration based on the position of the reference object and a user's eye gaze direction in which the user gazes at the reference object.

The HMD device 10 may detect at least one real object 11-1 and 11-2 contained in the surroundings. Also, the HMD device 10 may detect a portion of the body of the user. In FIG. 1, a hand 12 of the user is shown as an example of a portion of the body of the user. The HMD device 10 may distinguish between a hand of the user and a hand of another person using at least one of a shape of the hand of the user and a gesture of the hand of the user. The HMD device 10 may detect an event on the real object by the hand of the user. The HMD device 10 may detect a user's operation of touching the real object using the hand or instructing the real object as the event on the real object. The HMD device 10 may decide the real object 11-1, on which the event has been detected, as a reference object of the eye gaze calibration. Also, the HMD device 10 may decide a portion of the reference object, on which the event has been detected, as a reference point. The HMD device 10 may detect a user's eye gaze direction. The HMD device 10 may detect the position of a pupil 13 of the user to decide the user's eye gaze direction.

The HMD device 10 may perform eye gaze calibration based on the position of the decided reference object and the position of the pupil 13 of the user. Alternatively, the HMD device 10 may perform eye gaze calibration based on the position of the decided reference point and the position of the pupil 13 of the user. In a case in which the HMD device 10 performs the eye gaze calibration based on the position of the reference point, the eye gaze calibration may be performed with higher accuracy than in a case in which the HMD device 10 performs the eye gaze calibration based on the position of the reference object.

The HMD device 10 may set a virtual line linking the pupil 13 of the user to the reference object and calculate an intersection point 14 between the virtual line and the HMD device. Alternatively, the HMD device 10 may set a virtual line linking the pupil 13 of the user to the reference point and calculate the intersection point 14 between the virtual line and the HMD device. The HMD device 10 may decide the position of digital information to be displayed on the HMD device based on the calculated position of the intersection point 14.

As described above, the HMD device 10 has an effect in that the HMD device 10 may perform eye gaze calibration while a user wears and uses the HMD device 10 without using an additional calibration screen or calibration time.

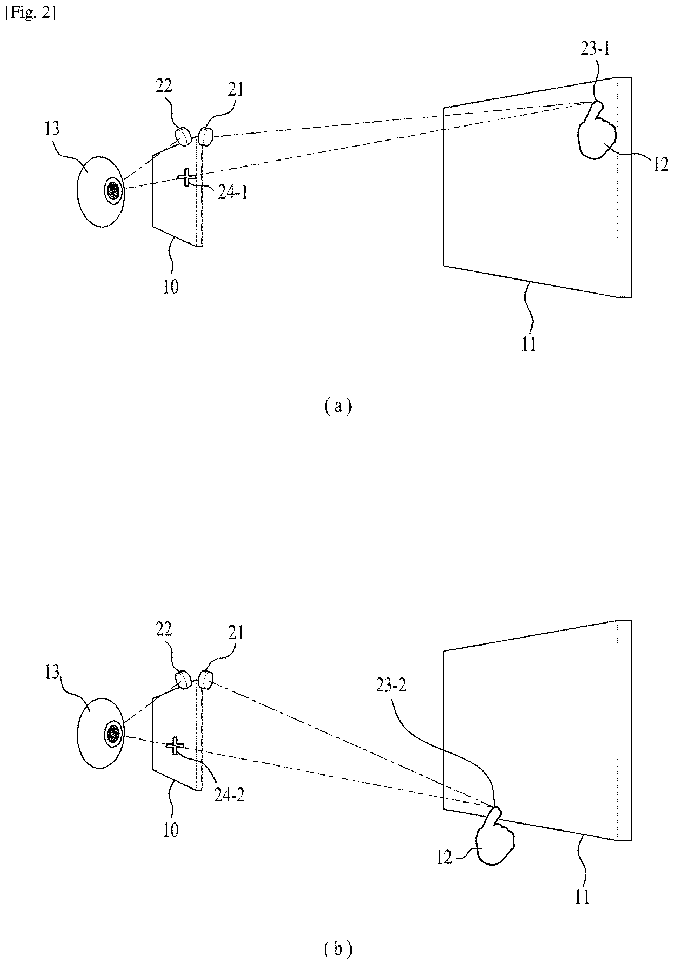

FIGs. 2(a) and 2(b) are views showing an eye gaze calibration method of an HMD device using a reference point according to an embodiment of the present specification. The HMD device 10 may decide a portion of a reference object as a reference point such that the reference point is used to perform the eye gaze calibration. The HMD device 10 may detect an event on the reference object by a hand of the user. The HMD device 10 may decide a point of the reference object on which the event has been generated as the reference point.

Referring to FIG. 2(a), the HMD device 10 may decide a reference object 11 as described with reference to FIG. 1. The HMD device 10 may detect a hand 12 of the user and detect a first event for the hand 12 of the user to touch the right side upper end of the reference object 11. The HMD device 10 may decide the right side upper end of the reference object, on which the first event has been generated, as a first reference point 23-1 using a camera unit 21 and an image processing unit. The HMD device 10 may decide a user's eye gaze direction in which the user gazes at the first reference point 23-1 using an eye gaze detection unit 22. The HMD device 10 may detect the position of a pupil 13 of the user to decide the user's eye gaze direction. The HMD device 10 may set a virtual line 25 linking the pupil 13 of the user to the first reference point 23-1 and calculate the position of a first intersection point 24-1 between the virtual line 25 and the HMD device. That is, the HMD device 10 may perform eye gaze calibration based on the position of the pupil 13 of the user and the position of the first reference point 23-1 and calculate the position of the first intersection point 24-1 as mentioned above as the result of the eye gaze calibration. The HMD device 10 may decide the position of a virtual object to be displayed on the HMD device based on the calculated position of the first intersection point 24-1.

In a case in which the detected position of the hand of the user is changed, the HMD device 10 may detect this as another event, which is different from the existing event. Referring to FIG. 2(b), the HMD device 10 may detect a second event for the hand 12 of the user to touch the middle lower end of the reference object 11. The HMD device 10 may decide the middle lower end of the reference object 11, on which the second event has been generated, as a second reference point 23-2 using the camera unit 21 and the image processing unit. The HMD device 10 may decide a user's eye gaze direction in which the user gazes at the second reference point 23-2 using the eye gaze detection unit 22. The HMD device 10 may detect the position of the pupil 13 of the user to decide the user's eye gaze direction. The HMD device 10 may set a virtual line 25 linking the pupil 13 of the user to the second reference point 23-2 and calculate the position of a second intersection point 24-2 between the virtual line 25 and the HMD device. That is, the HMD device 10 may perform eye gaze calibration based on the position of the pupil 13 of the user and the position of the second reference point 23-2 and calculate the position of the second intersection point 24-2 as mentioned above as the result of the eye gaze calibration. The HMD device 10 may decide the position of a virtual object to be displayed on the HMD device based on the calculated position of the second intersection point 24-2.

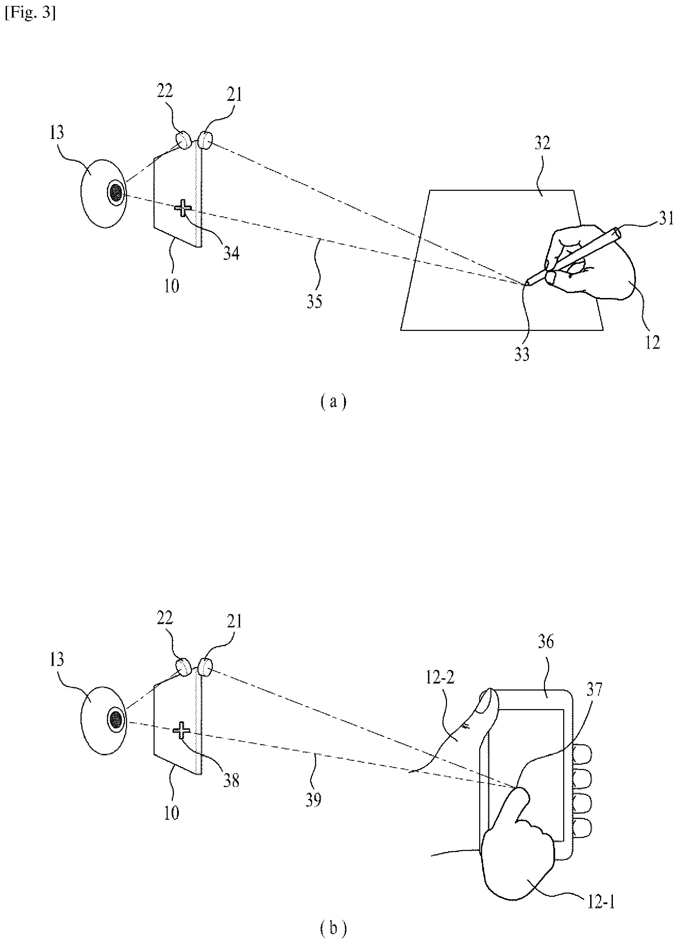

FIGs. 3(a) and 3(b) are views showing examples of a reference object and a reference point according to an embodiment of the present specification. The HMD device 10 may detect a real object and a hand of the user. The HMD device 10 may detect an event on the real object by the hand of the user. The HMD device 10 may decide the real object, on which the event has been detected, as a reference object. The HMD device 10 may decide a point of the reference object, on which the event has been detected, as a reference point. The HMD device 10 may use at least one of the decided reference object and the decided reference point to perform the eye gaze calibration.

FIG. 3(a) shows eye gaze calibration using a writing operation performed by the user using a pen. The HMD device 10 may detect a pen 31 and a notebook 32 as a real object using the camera unit 21 and the image processing unit. Also, the HMD device 10 may detect a hand 12 of the user performing a writing operation while holding the pen 31. The HMD device 10 may detect an operation of performing the writing operation using the hand 12 of the user while holding the pen 31 as an event. As a result, the HMD device 10 may decide the pen 31 as a reference object. Also, the HMD device 10 may decide the tip or a pen point of the pen 31 contacting the notebook 32 as a reference point.

In a case in which the eye gaze calibration is performed using the reference object, the HMD device 10 may perform eye gaze calibration using the position of the pen 31, which is the reference object, and a user's eye gaze direction. The HMD device 10 may detect the position of the pupil 13 of the user using the eye gaze detection unit 22 and decide the user's eye gaze direction based thereupon. The HMD device 10 may set a virtual line 35 linking the pupil 13 of the user to the reference object 31 and calculate the position of an intersection point 34 between the virtual line 35 and the HMD device. That is, the HMD device 10 may perform eye gaze calibration based on the position of the pupil 13 of the user and the position of the reference object 31 and calculate the position of the intersection point 34 as mentioned above as the result of the eye gaze calibration. The HMD device 10 may decide the position of a virtual object to be displayed on the HMD device based on the calculated position of the intersection point 34.

In a case in which the eye gaze calibration is performed using the reference point, the HMD device 10 may decide the tip or the pen point of the pen 31, which is the reference object, as a reference point 33. The HMD device 10 may perform eye gaze calibration using the position of the reference point and a user's eye gaze direction. The HMD device 10 may detect the position of the pupil 13 of the user using the eye gaze detection unit 22 and decide the user's eye gaze direction based thereupon. The HMD device 10 may set a virtual line 35 linking the pupil 13 of the user to the reference point 33 and calculate the position of an intersection point 34 between the virtual line 35 and the HMD device. That is, the HMD device 10 may perform eye gaze calibration based on the position of the pupil 13 of the user and the position of the reference point 33 and calculate the position of the intersection point 34 as mentioned above as the result of the eye gaze calibration. The HMD device 10 may decide the position of a virtual object to be displayed on the HMD device based on the calculated position of the intersection point 34.

FIG. 3(b) shows eye gaze calibration using a user's operation of controlling a portable device. The HMD device 10 may detect a portable device 36 as a real object using the camera unit 21 and the image processing unit. Also, the HMD device 10 may detect a hand 12-2 of the user gripping the portable device 36 and a hand 12-1 of the user touching the portable device 36. The HMD device 10 may detect an operation of touching the portable device 36 using at least one of the hand 12-1 of the user and an operation of gripping the portable device 36 using the hand 12-2 of the user as an event. As a result, the HMD device 10 may decide the portable device 36 as a reference object. Also, the HMD device 10 may decide a portion of the portable device 36, which the hand 12-1 of the user has touched, as a reference point.

In a case in which the eye gaze calibration is performed using the reference object, the HMD device 10 may perform eye gaze calibration using the position of the portable device 36, which is the reference object, and a user's eye gaze direction. The HMD device 10 may detect the position of the pupil 13 of the user using the eye gaze detection unit 22 and decide the user's eye gaze direction base thereupon. The HMD device 10 may set a virtual line 39 linking the pupil 13 of the user to the reference object 36 and calculate the position of an intersection point 38 between the virtual line 39 and the HMD device. That is, the HMD device 10 may perform eye gaze calibration based on the position of the pupil 13 of the user and the position of the reference object 36 and calculate the position of the intersection point 38 as mentioned above as the result of the eye gaze calibration. The HMD device 10 may decide the position of a virtual object to be displayed on the HMD device based on the calculated position of the intersection point 38.

In a case in which the eye gaze calibration is performed using the reference point, the HMD device 10 may decide a point of the reference object, i.e. the portable device 36, on which the event has been generated, as a reference point 37. For example, in a case in which the hand of the user touches an object displayed on the portable device 36, a point of the object, which the user has touched, may be decided as a reference point 37. The HMD device 10 may perform eye gaze calibration using the position of the reference point and a user's eye gaze direction. The HMD device 10 may detect the position of the pupil 13 of the user using the eye gaze detection unit 22 and decide the user's eye gaze direction based thereupon. The HMD device 10 may set a virtual line 39 linking the pupil 13 of the user to the reference point 37 and calculate the position of an intersection point 38 between the virtual line 39 and the HMD device. That is, the HMD device 10 may perform eye gaze calibration based on the position of the pupil 13 of the user and the position of the reference point 37 and calculate the position of the intersection point 38 as mentioned above as the result of the eye gaze calibration. The HMD device 10 may decide the position of a virtual object to be displayed on the HMD device based on the calculated position of the intersection point 38.

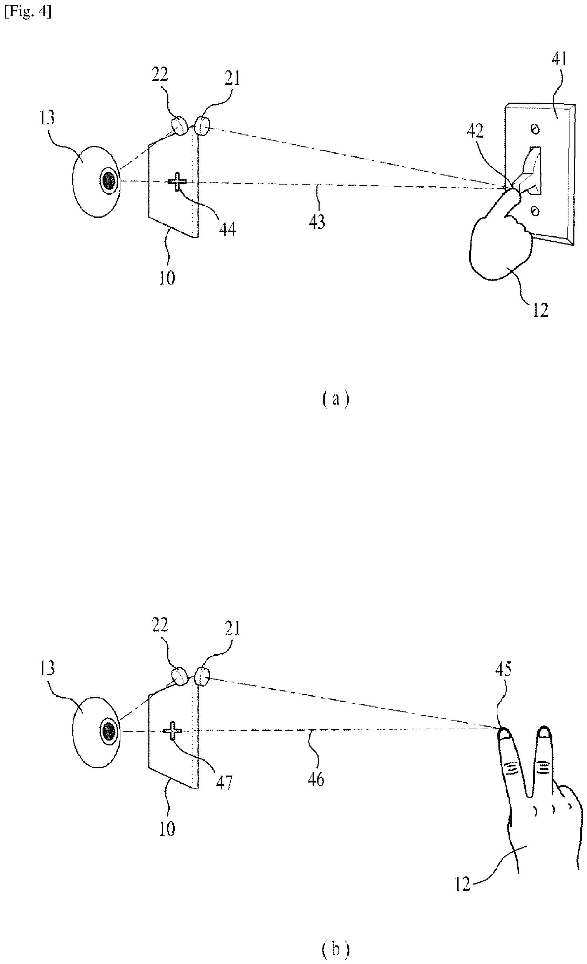

FIGs. 4(a) and 4(b) are views showing examples of a reference object and a reference point according to another embodiment of the present specification. The HMD device 10 may detect a real object and a hand of the user. The HMD device 10 may detect an event on the real object by the hand of the user. The HMD device 10 may decide the real object, on which the event has been detected, as a reference object. The HMD device 10 may decide a point of the reference object, on which the event has been detected, as a reference point. The HMD device 10 may use at least one of the decided reference object and the decided reference point to perform the eye gaze calibration. Also, the HMD device 10 may detect the hand of the user as a real object. The HMD device 10 may detect at least one of a gesture of the hand of the user and a shape of the hand of the user and decide the detected hand of the user as a reference object together with a predetermined gesture or shape of the hand of the user. Also, the HMD device 10 may decide a portion of the hand of the user as a reference point.

FIG. 4(a) shows eye gaze calibration using a user's operation of controlling a switch. The HMD device 10 may detect a switch 41 as a real object using the camera unit 21 and the image processing unit. Also, the HMD device 10 may detect a hand 12 of the user to control the switch 41. The HMD device 10 may detect an operation of controlling the switch 41 using the hand 12 of the user as an event. As a result, the HMD device 10 may decide the switch 41 as a reference object. Also, the HMD device 10 may decide a portion of the switch, which the hand 12 of the user has touched, as a reference point.

In a case in which the eye gaze calibration is performed using the reference object, the HMD device 10 may perform eye gaze calibration using the position of the switch 41, which is the reference object, and a user's eye gaze direction. The HMD device 10 may detect the position of the pupil 13 of the user using the eye gaze detection unit 22 and decide the user's eye gaze direction based thereupon. The HMD device 10 may set a virtual line 43 linking the pupil 13 of the user to the reference object 41 and calculate the position of an intersection point 44 between the virtual line 43 and the HMD device. That is, the HMD device 10 may perform eye gaze calibration based on the position of the pupil 13 of the user and the position of the reference object 41 and calculate the position of the intersection point 44 as mentioned above as the result of the eye gaze calibration. The HMD device 10 may decide the position of a virtual object to be displayed on the HMD device based on the calculated position of the intersection point 44.

In a case in which the eye gaze calibration is performed using the reference point, the HMD device 10 may decide a portion of the switch 41, which is the reference object, which the hand of the user has touched, as a reference point 42. The HMD device 10 may perform eye gaze calibration using the position of the reference point and a user's eye gaze direction. The HMD device 10 may detect the position of the pupil 13 of the user using the eye gaze detection unit 22 and decide the user's eye gaze direction based thereupon. The HMD device 10 may set a virtual line 43 linking the pupil 13 of the user to the reference point 42 and calculate the position of an intersection point 44 between the virtual line 43 and the HMD device. That is, the HMD device 10 may perform eye gaze calibration based on the position of the pupil 13 of the user and the position of the reference point 42 and calculate the position of the intersection point 44 as mentioned above as the result of the eye gaze calibration. The HMD device 10 may decide the position of a virtual object to be displayed on the HMD device based on the calculated position of the intersection point 44.

Also, the HMD device 10 may detect the hand of the user as a real object. The HMD device 10 may detect at least one of a gesture of the hand of the user and a shape of the hand of the user and decide the detected hand of the user as a reference object together with at least one of a predetermined gesture and shape of the hand of the user. Also, the HMD device 10 may decide a portion of the hand of the user as a reference point.

FIG. 4(b) shows eye gaze calibration using a hand of the user as a reference object. The HMD device 10 may detect a hand 12 of the user as a real object using the camera unit 21 and the image processing unit. The HMD device 10 may detect at least one of a gesture and a shape indicated by the hand 12 of the user as an event. The HMD device 10 may store at least one of a gesture and a shape of the hand of the user for the eye gaze calibration. The HMD device 10 may compare the gesture indicated by the hand 12 of the user with the stored gesture to decide whether the event has been generated. Upon determining that the gesture indicated by the hand 12 of the user matches the stored gesture, the HMD device 10 may detect this as event generation. Also, the HMD device 10 may compare the shape indicated by the hand 12 of the user with the stored shape of the hand to decide whether the event has been generated. Upon determining that the shape indicated by the hand 12 of the user matches the stored shape of the hand, the HMD device 10 may detect this as event generation.

When the HMD device 10 detects an event based on the gesture or the shape of the hand 12 of the user, the HMD device 10 may decide the hand 12 of the user as a reference object. Also, the HMD device 10 may decide a portion of the hand 12 of the user as a reference point. For example, the HMD device 10 may decide the tip of a finger of the user as a reference point 45. The HMD device 10 may decide which portion of the hand of the user becomes a reference point with respect to a plurality of gestures or hand shapes. That is, in a case in which a first gesture has been detected, the HMD device 10 may decide a first portion of the hand of the user as a reference point, and, in a case in which a second gesture has been detected, the HMD device 10 may decide a second portion of the hand of the user as a reference point. Also, in a case in which a first hand shape has been detected, the HMD device 10 may decide a first portion of the hand of the user as a reference point, and, in a case in which a second hand shape has been detected, the HMD device 10 may decide a second portion of the hand of the user as a reference point. For example, in a case in which the HMD device 10 has detected a V-shaped hand gesture as shown in FIG. 4(b), the HMD device 10 may decide the tip of the index finger as a reference point. On the other hand, in a case in which the HMD device 10 has detected a hand with only the thumb stretched upward, the HMD device 10 may decide a nail of the thumb as a reference point.

The HMD device 10 may perform eye gaze calibration using the position of the reference point and a user's eye gaze direction. The HMD device 10 may detect the position of the pupil 13 of the user using the eye gaze detection unit 22 and decide the user's eye gaze direction based thereupon. The HMD device 10 may set a virtual line 46 linking the pupil 13 of the user to the reference point 45 and calculate the position of an intersection point 47 between the virtual line 46 and the HMD device. That is, the HMD device 10 may perform eye gaze calibration based on the position of the pupil 13 of the user and the position of the reference point 45 and calculate the position of the intersection point 47 as mentioned above as the result of the eye gaze calibration. The HMD device 10 may decide the position of a virtual object to be displayed on the HMD device based on the calculated position of the intersection point 47.

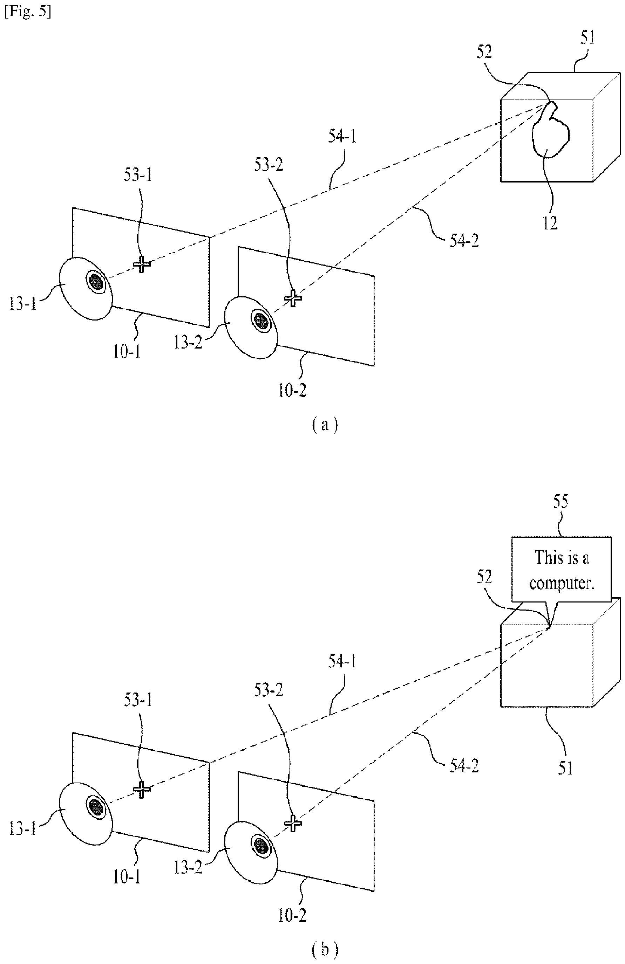

FIGs. 5(a) and 5(b) are views showing a method of displaying an augmented reality (AR) message using eye gaze calibration according to an embodiment of the present specification. An HMD device may display an augmented reality message using eye gaze calibration. The HMD device may provide a left eye and a right eye of a user with a left image and a right image, respectively, to display an image having depth. That is, the HMD device may provide the user with a three-dimensional image using binocular disparity between the left image and the right image.

When a reference point is decided by a hand of the user, the HMD device may measure the distance from the HMD device to the reference point using a distance measurement unit. The HMD device may decide depth of an augmented reality message based on the measured distance from the HMD device to the reference point. As a result, the HMD device may display an augmented reality message based on the depth of the reference point.

FIG. 5(a) is a view showing a method of performing eye gaze calibration with respect to both eyes of a user using a reference point. The HMD device may include a left subunit 10-1 to provide a graphical user interface to a left eye of the user and a right subunit 10-2 to provide a graphical user interface to a right eye of the user. Each subunit of the HMD device may include a camera unit and an eye gaze detection unit. Hereinafter, particulars common to the left subunit and the right subunit will be described in terms of the HMD device.

The HMD device 10-1 and 10-2 may detect a reference object 51 and a hand 12 of the user. The HMD device 10-1 and 10-2 may detect an event in which the hand 12 of the user touches a portion of the reference object 51. The HMD device 10-1 and 10-2 may decide a point of the reference object, on which the event has been generated, as a reference point 52 using a camera unit and an image processing unit. The HMD device 10-1 and 10-2 may decide a user's eye gaze direction in which the user gazes at the reference point 52 using an eye gaze detection unit. The HMD device may detect the position of a pupil 13 of the user to decide the user's eye gaze direction.

The left subunit 10-1 of the HMD device may set a first virtual line 54-1 linking a pupil 13-1 of the left eye of the user to the reference point 52 and calculate the position of a first intersection point 53-1 between the first virtual line 54-1 and the left subunit 10-1. That is, the HMD device may perform eye gaze calibration based on the position of the pupil 13-1 of the left eye of the user and the position of the reference point 52 and calculate the position of the first intersection point 53-1 as mentioned above as the result of the eye gaze calibration. The HMD device may decide the position of a left image to be displayed on the left subunit 10-1 based on the calculated position of the first intersection point 53-1.

The right subunit 10-2 of the HMD device may set a first virtual line 54-2 linking a pupil 13-2 of the right eye of the user to the reference point 52 and calculate the position of a second intersection point 53-2 between the first virtual line 54-2 and the right subunit 10-2. That is, the HMD device may perform eye gaze calibration based on the position of the pupil 13-2 of the right eye of the user and the position of the reference point 52 and calculate the position of the second intersection point 53-2 as mentioned above as the result of the eye gaze calibration. The HMD device may decide the position of a right image to be displayed on the right subunit 10-2 based on the calculated position of the second intersection point 53-2.

The HMD device may measure the distance from the HMD device to the reference point using a distance measurement unit. The distance measurement unit may measure the distance from the HMD device to the reference point using at least one selected from among an ultrasonic sensor, a laser sensor, and an infrared sensor. The HMD device may decide depth of an augmented reality message based on the measured distance from the HMD device to the reference point. For example, the HMD device may set depth of an augmented reality message such that the depth of the augmented reality message is equal to depth of the reference point. As a result, the HMD device may display an augmented reality message such that the augmented reality message is located in the same plane as the reference point.

FIG. 5(b) is a view showing a method of displaying an augmented reality message using binocular disparity between a left image and a right image. The left subunit 10-1 of the HMD device may display a left image, and the right subunit 10-2 of the HMD device may display a right image. The HMD device may display a left image corresponding to a first intersection point 53-1 and a right image corresponding to a second intersection point 53-2.

The HMD device may apply depth to an augmented reality message to be displayed. That is, the HMD device may generate an augmented reality message to be displayed as a left image and a right image and apply binocular disparity between the left image and the right image to convert the augmented reality message into a three-dimensional image. As a result, the HMD device may display an augmented reality message 55 having depth. For example, the HMD device may provide an augmented reality message 55 located in the same plane as the reference point to the user.

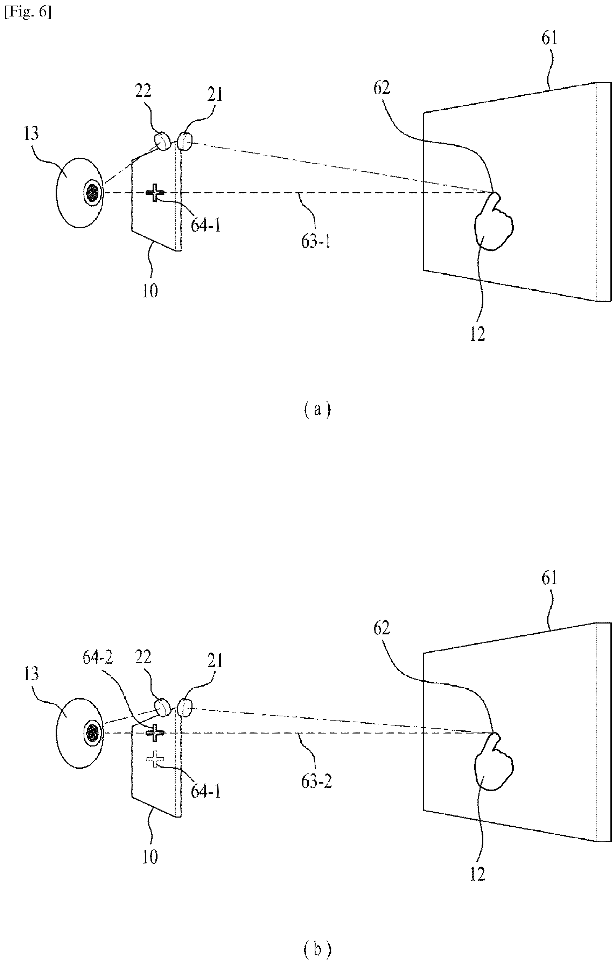

FIGs. 6(a) and 6(b) are views showing a method of correcting an intersection point of the HMD device according to an embodiment of the present specification. Referring to FIG. 6(a), the HMD device 10 may detect a reference object 61 and a hand 12 of a user. The HMD device 10 may detect an event in which the hand 12 of the user touches a portion of the reference object 61. The HMD device 10 may decide a point of the reference object, on which the event has been generated, as a reference point 62 using a camera unit 21 and an image processing unit. The HMD device 10 may decide a user's eye gaze direction in which the user gazes at the reference point 62 using an eye gaze detection unit 22. The HMD device 10 may detect the position of a pupil 13 of the user to decide the user's eye gaze direction.

The HMD device 10 may set a first virtual line 63-1 linking the pupil 13 of the user to the reference point 62 and calculate the position of a first intersection point 64-1 between the first virtual line 63-1 and the HMD device 10. That is, the HMD device 10 may perform eye gaze calibration based on the position of the pupil 13 of the user and the position of the reference point 62 and calculate the position of the first intersection point 64-1 as mentioned above as the result of the eye gaze calibration. The HMD device 10 may decide the position of a virtual object to be displayed on the HMD device based on the calculated position of the first intersection point 64-1.

A relative position between the HMD device 10 and the pupil of the user may be changed as the result of movement of the user. In this case, the HMD device 10 may detect that it is necessary to perform or re-perform eye gaze calibration. The HMD device 10 may detect the change of the relative position between the HMD device 10 and the pupil of the user to correct the position of an intersection point through eye gaze calibration. The HMD device 10 may detect the change of the relative position between the HMD device 10 and the pupil of the user using a camera unit 22. In this case, the HMD device 10 may correct the position of an intersection point through eye gaze calibration. Also, the HMD device 10 may change the position of a virtual object to be displayed based on the corrected potion of the intersection point.

Referring to FIG. 6(b), the relative position between the HMD device 10 and the pupil of the user is lower than the relative position between the HMD device 10 and the pupil of the user shown in FIG. 6(a). In a case in which the relative position between the HMD device 10 and the pupil of the user is changed, the HMD device 10 may set a second virtual line 63-2 linking the pupil 13 of the user to the reference point 62 and calculate the position of a second intersection point 64-2 between the first virtual line 63-2 and the HMD device 10. That is, the HMD device 10 may perform eye gaze calibration based on the position of the pupil 13 of the user and the position of the reference point 62 and calculate the position of the second intersection point 64-2 as mentioned above as the result of the eye gaze calibration. The HMD device 10 may decide the position of a virtual object to be displayed on the HMD device 10 based on the calculated position of the second intersection point 64-2. Through the above process, the HMD device 10 may correct the position of the intersection point from the first intersection point 64-1 to the second intersection point 64-2 to decide the position of a virtual object to be displayed such that the position of the virtual object corresponds to the user's eye gaze. Consequently, the embodiment of the present specification has the effect of adaptively deciding the position of a virtual object based on the relative position between the HMD device and the pupil of the user.

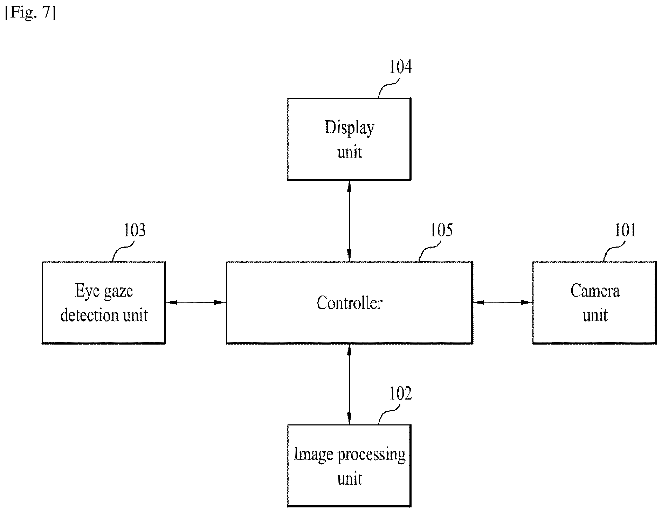

FIG. 7 is a block diagram showing an HMD device according to an embodiment of the present specification. The HMD device may include a camera unit 101, an image processing unit 102, an eye gaze detection unit 103, a display unit 104, and a controller 105. In addition, the HMD device may further include a distance measurement unit.

The camera unit 101 may sense an image of the surroundings located in front of the HMD device. The camera unit 101 may include an image sensor. The image sensor may convert an optical signal into an electrical signal. The camera unit 101 may convert the sensed image of the surroundings into an electrical signal and transmit the electrical signal to the controller. The camera unit 101 may sense an image having a range corresponding to a visual field of a user. Consequently, the HMD device may decide which of the real objects contained in the surroundings the user gazes at based on the sensed image and the position of a pupil of the user.

The image processing unit 102 may distinguish a real object from the other object contained in the sensed image of the surroundings. The image processing unit 102 may detect at least one real object contained in the image of the surroundings as an object unit. Also, the image processing unit 102 may detect a hand of the user from the sensed image of the surroundings. The image processing unit 102 may distinguish the hand of the user from a hand of another person using at least one of a shape and a gesture of the hand of the user. The image processing unit 102 may detect an event of the hand of the user on a real object and decide the real object, on which the event has been detected, as a reference object. Also, the image processing unit 102 may decide a portion of the reference object, on which the event has been detected, as a reference point. The image processing unit 102 may transmit information regarding at least one of the decided reference object and the decided reference point to the controller.

The eye gaze detection unit 103 may detect a user's eye gaze direction. The eye gaze detection unit 103 may detect a user's eye gaze direction based on movement of a pupil of the user. Also, the eye gaze detection unit 103 may detect whether eye gaze calibration is to be re-performed based on the relative position between the HMD device and the pupil of the user. The eye gaze detection unit 103 may provide information regarding the user's eye gaze direction to the controller.

The display unit 104 may display a virtual object. The virtual object may include a graphical user interface provided to the user by the display unit. The display unit 104 may display a left image and a right image on a left eye and a right eye of the user, respectively. The display unit 104 may display a virtual object having depth using binocular disparity. The display unit 104 may control the position of a virtual object to be displayed and display the virtual object according to the result of the eye gaze calibration. The display unit 104 may include a transparent optical display unit. Consequently, the user may recognize the surroundings from a visible light transmitted through the display unit 104.

The distance measurement unit may measure the distance from the HMD device to a reference object. Also, the distance measurement unit may measure the distance from the HMD device to a reference point. The HMD device may decide depth of a virtual object to be displayed based on the distance from the HMD device to the reference object or the reference point measured by the distance measurement unit. The distance measurement unit may measure the distance from the HMD device to the reference object or the reference point using at least one selected from among an ultrasonic sensor, a laser sensor, and an infrared sensor. The distance measurement unit may transmit information regarding the measured distance from the HMD device to the reference object or the reference point to the controller. In embodiments of the present specification, the distance measurement unit may be an optional element of the HMD device.

The controller 105 may perform an application and process data in the HMD device. The controller 105 may control the camera unit 101, the image processing unit 102, the eye gaze detection unit 103, and the display unit 104. Also, the controller 105 may control transmission and reception of data between the above units. In embodiments of the present specification, the controller 105 may receive an image of the surroundings from the camera unit 101. Also, the controller 105 may receive information regarding a reference object, a reference point, event generation, and position of a hand of a user from the image processing unit 102. Also, the controller 105 may receive information regarding a user's eye gaze direction from the eye gaze detection unit 103. The controller 105 may perform eye gaze calibration using the information regarding the reference object and the user's eye gaze direction. Also, the controller 105 may perform eye gaze calibration using the information regarding the reference point and the user's eye gaze direction. The controller 105 may control the position of a virtual object displayed on the display unit 104 according to the result of the eye gaze calibration.

FIG. 7 is a block diagram of an embodiment of the present specification. The respective blocks indicate elements of the HMD device which logically distinguish therebetween. Consequently, the elements of the HMD device may be incorporated into a single chip or a plurality of chips according to design of the HMD device.

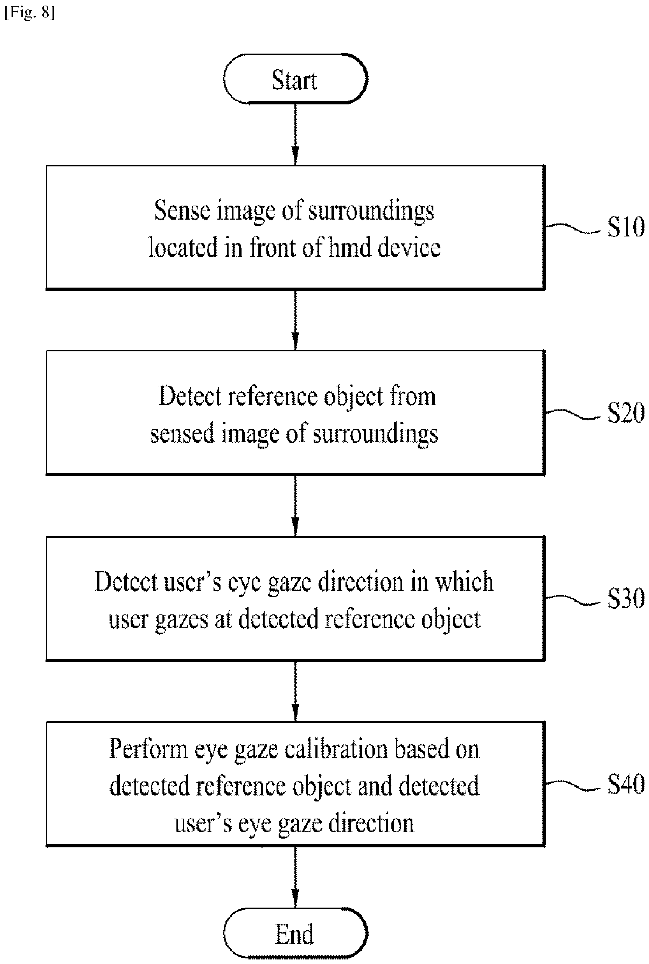

FIG. 8 is a flowchart showing an eye gaze calibration method according to an embodiment of the present specification. The HMD device may sense an image of the surroundings located in front of the HMD device using the camera unit (S10). The HMD device may sense a range corresponding to a visual field of a user.

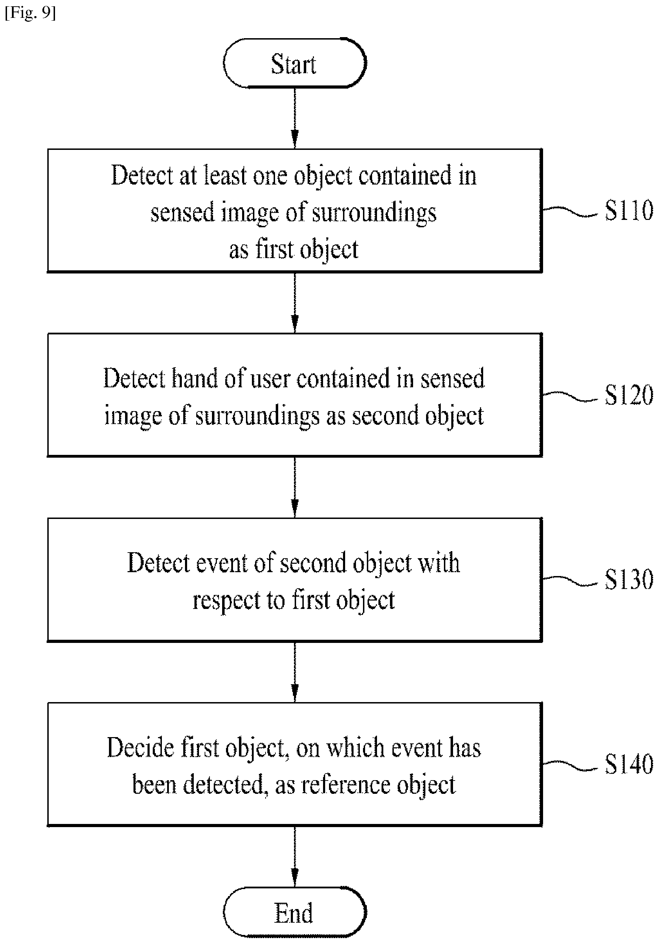

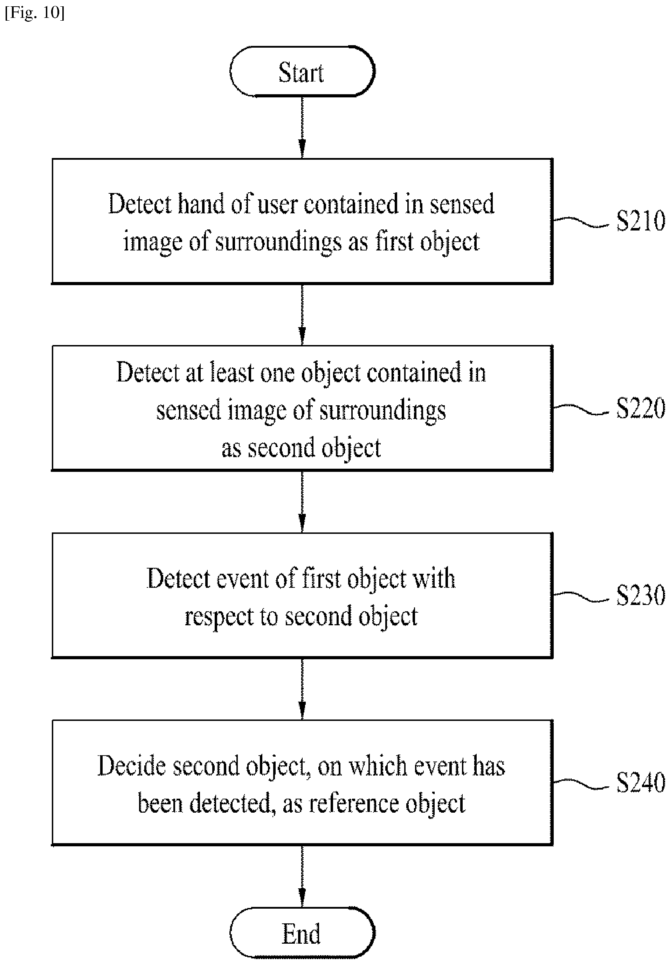

The HMD device may detect a reference object from the sensed image of the surroundings using the image processing unit (S20). As previously described with reference to FIGs. 1 to 4, the HMD device may distinguish at least one real object contained in the sensed image of the surroundings as an object unit. The HMD device may detect a reference object from the at least one real object distinguished as the object unit. A method of the HMD device detecting a reference object will hereinafter be described in detail with reference to FIGs. 9 and 10. Also, the HMD device may detect a portion of the reference object as a reference point. In this case, the HMD device may perform eye gaze calibration using the position of the reference point instead of the position of the reference object such that the eye gaze calibration is accurately performed.

The HMD device may decide a user's eye gaze direction in which a user gazes at the detected reference object using the eye gaze detection unit (S30). The HMD device may detect the position of a pupil of a user wearing the HMD device to decide the user's eye gaze direction. The HMD device may correct the user's eye gaze direction based on at least one of the relative position between the HMD device and the pupil of the user and the distance between the HMD device and the pupil of the user.

The HMD device may perform eye gaze calibration based on the detected reference object and the detected user's eye gaze direction using the controller (S40). In a case in which the eye gaze calibration is performed using the reference object as previously described with reference to FIGs. 1 to 4, the HMD device may set a virtual line linking the pupil of the user to the reference object using the position of the detected reference object and the detected user's eye gaze direction. The HMD device may calculate the position of an intersection point between the virtual line and the HMD device. That is, the HMD device may perform eye gaze calibration based on the position of the pupil of the user and the position of the reference object and calculate the position of the intersection point as mentioned above as the result of the eye gaze calibration. The HMD device may decide the position of a virtual object to be displayed on the HMD device based on the calculated position of the intersection point.

In a case in which the eye gaze calibration is performed using the reference point as another embodiment, the HMD device may set a virtual line linking the pupil of the user to the reference point using the position of the detected reference point and the detected user's eye gaze direction. The HMD device may calculate the position of an intersection point between the virtual line and the HMD device. That is, the HMD device may perform eye gaze calibration based on the position of the pupil of the user and the position of the reference point and calculate the position of the intersection point as mentioned above as the result of the eye gaze calibration. The HMD device may decide the position of a virtual object to be displayed on the HMD device based on the calculated position of the intersection point.

The virtual object may include an object displayed on the display unit of the HMD device. For example, the HMD device may display virtual objects, such as an application icon, an alarm message, a navigation direction indicator, and a notification message, as well as an augmented reality (AR) message described with reference to FIG. 5 on the display unit.

According to embodiments, the HMD device may perform eye gaze calibration only in a case in which the difference between the direction of the reference object and the user's eye gaze direction in which the user gazes at the reference object is within an allowable error range. In a case in which the difference between the direction of the reference object and the user's eye gaze direction in which the user gazes at the reference object is out of the allowable error range, on the other hand, the HMD device may suspend eye gaze calibration in order to prevent the occurrence of an error of eye gaze calibration.

FIG. 9 is a flowchart showing a method of deciding a reference object according to an embodiment of the present specification. The HMD device may detect at least one object contained in the sensed image of the surroundings as a first object (S110). As previously described with reference to FIGs. 1 to 4, the HMD device may extract at least one real object from the image of the surroundings using the image processing unit. The HMD device may detect the extracted at least one real object as a first object. Alternatively, the HMD device may detect two or more real objects as first objects.

The HMD device may detect a hand of a user contained in the sensed image of the surroundings as a second object (S120). As previously described with reference to FIGs. 1 to 4, the HMD device may detect the hand of the user from the image of the surroundings using the image processing unit. Also, the HMD device may detect the detected hand of the user as a second object. The HMD device may distinguish between the hand of the user and a hand of another person using at least one of a shape of the hand of the user and a gesture of the hand of the user. For example, when the HMD device has detected a V-shaped hand gesture of the user, the HMD device may detect the hand of the user as a second object. In another embodiment, the HMD device may distinguish between the hand of the user and a hand of another person based on the lines of the palm of the user or the shape of a vein on the back of the hand of the user.

The HMD device may detect an event of the second object with respect to the first object (S130). As previously described with reference to FIGs. 1 to 4, the HMD device may detect an operation of controlling the real object detected as the first object using the hand of the user detected as the second object through the image processing unit. The HMD device may detect the above operation as an event of the second object with respect to the first object.

For example, the HMD device may detect an external device as a first object and the tip of a finger of the user as a second object. In a case in which the first object is a keyboard input device, the HMD device may detect an operation of pressing a key of the keyboard as an event. Also, in a case in which the first object is a pen, the HMD device may detect a writing operation using a pen as an event. Also, in a case in which the first object is a device including a touch sensitive display, the HMD device may detect an operation of touching the touch sensitive display as an event. Also, in a case in which the first object is an electronic instrument, the HMD device may detect an operation of controlling a control button of the electronic instrument as an event. The control button of the electronic instrument may include at least one selected from among a power button, volume control buttons, and channel control buttons.

The HMD device may decide the first object, on which the event has been detected, as a reference object (S140). As previously described with reference to FIGs. 1 to 4, the HMD device may decide the first object, on which the event has been detected, as a reference object using the image processing unit. That is, the HMD device may detect one of the detected first objects, i.e. the first object, on which the event has been detected, as a reference object.

For example, in a case in which the user presses a key of a keyboard, the HMD device may detect the keyboard as a reference object. Also, in a case in which the user performs a writing operation using a pen, the HMD device may detect the pen as a reference object. Also, in a case in which the user touches a touch sensitive display, the HMD device may detect a device including the touch sensitive display as a reference object. Also, in a case in which the user controls a control button of an electronic instrument, the HMD device may detect the electronic instrument as a reference object.

Also, the HMD device may detect a point of the reference object, on which the event has been generated, as a reference point. In this case, the HMD device may perform eye gaze calibration using the position of the reference point instead of the position of the reference object such that the eye gaze calibration is accurately performed.

For example, in a case in which the reference object is a keyboard input device, the HMD device may detect a key of the keyboard pressed by the user as a reference point. Also, in a case in which the reference object is a pen, the HMD device may detect the tip of the pen gripped by the user as a reference point. Also, in a case in which the reference object is a device including a touch sensitive display, the HMD device may detect a soft button of the touch sensitive display, which the user touches, as a reference object. Also, in a case in which the reference object is an electronic instrument, the HMD device may detect a control button of the electronic instrument controlled by the user as a reference object.

The HMD device may perform eye gaze calibration based on at least one of the detected reference object and the detected reference point.

FIG. 10 is a flowchart showing a method of deciding a reference object according to another embodiment of the present specification. The HMD device may detect a hand of a user contained in a sensed image of the surroundings as a first object (S210). The HMD device may detect the hand of the user before detecting a real object. As previously described with reference to FIGs. 1 to 4, the HMD device may detect the hand of the user from the image of the surroundings using the image processing unit. Also, the HMD device may detect the detected hand of the user as a first object. The HMD device may distinguish between the hand of the user and a hand of another person using at least one of a shape of the hand of the user and a gesture of the hand of the user. For example, when the HMD device has detected a V-shaped hand gesture of the user, the HMD device may detect the hand of the user as a first object. In another embodiment, the HMD device may distinguish between the hand of the user and a hand of another person based on the lines of the palm of the user or the shape of a vein on the back of the hand of the user.

The HMD device may detect at least one object contained in the sensed image of the surroundings as a second object (S220). As previously described with reference to FIGs. 1 to 4, the HMD device may extract at least one real object from the image of the surroundings using the image processing unit. The HMD device may detect the extracted at least one real object as a second object. Alternatively, the HMD device may detect two or more real objects as second objects.

The HMD device may detect an event of the first object with respect to the second object (S230). As previously described with reference to FIGs. 1 to 4, the HMD device may detect an operation of controlling the real object detected as the second object using the hand of the user detected as the first object through the image processing unit. The HMD device may detect the above operation as an event of the first object with respect to the second object.

For example, the HMD device may detect the tip of a finger of the user as a first object and an external device as a second object. In a case in which the second object is a keyboard input device, the HMD device may detect an operation of pressing a key of the keyboard as an event. Also, in a case in which the second object is a pen, the HMD device may detect a writing operation using a pen as an event. Also, in a case in which the second object is a device including a touch sensitive display, the HMD device may detect an operation of touching the touch sensitive display as an event. Also, in a case in which the second object is an electronic instrument, the HMD device may detect an operation of controlling a control button of the electronic instrument as an event. The control button of the electronic instrument may include at least one selected from among a power button, volume control buttons, and channel control buttons.

The HMD device may decide the second object, on which the event has been detected, as a reference object (S240). As previously described with reference to FIGs. 1 to 4, the HMD device may decide the second object, on which the event has been detected, as a reference object using the image processing unit. That is, the HMD device may detect one of the detected second objects, i.e. the second object, on which the event has been detected, as a reference object.

For example, in a case in which the user presses a key of a keyboard, the HMD device may detect the keyboard as a reference object. Also, in a case in which the user performs a writing operation using a pen, the HMD device may detect the pen as a reference object. Also, in a case in which the user touches a touch sensitive display, the HMD device may detect a device including the touch sensitive display as a reference object. Also, in a case in which the user controls a control button of an electronic instrument, the HMD device may detect the electronic instrument as a reference object.

Also, the HMD device may detect a point of the reference object, on which the event has been generated, as a reference point. In this case, the HMD device may perform
eye gaze calibration using the position of the reference point instead of the position of the reference object such that the eye gaze calibration is accurately performed.

For example, in a case in which the reference object is a keyboard input device, the HMD device may detect a key of the keyboard pressed by the user as a reference point. Also, in a case in which the reference object is a pen, the HMD device may detect the tip of the pen gripped by the user as a reference point. Also, in a case in which the reference object is a device including a touch sensitive display, the HMD device may detect a soft button of the touch sensitive display, which the user touches, as a
reference object. Also, in a case in which the reference object is an electronic in strument, the HMD device may detect a control button of the electronic instrument controlled by the user as a reference object.

### Mode for the Invention

Various embodiments have been described in the best mode for carrying out the invention.

### Industrial Applicability

As described above, the present invention is totally or partially applicable to electronic devices.

## Claims

1. A head mounted display (HMD) (10) device comprising:
a camera unit (21) configured to sense an image of surroundings located in front of the HMD device;
an image processing unit (102) configured to detect a reference object from the sensed image of the surroundings;
an eye gaze detection unit (103) configured to detect an eye gaze direction in which a user gazes at the detected reference object; and
a controller (105) configured to perform eye gaze calibration based on the detected reference object and the detected eye gaze direction,
wherein the image processing unit is configured to
detect at least one object contained in the sensed image of the surroundings as a first object, the at least one object being a real object (11-1, 11-2) contained in the surroundings,
detect a hand (12) of the user contained in the sensed image of the surroundings as a second object,
detect an event of the second object with respect to the first object, and
decide the first object, on which the event has been detected, as the reference object, and
wherein the controller is configured to;
set a virtual line (25) linking a pupil (13) of the user to the reference object and calculate an intersection point (24- 2) between the virtual line and the HMD, and
decide a position of digital information to be displayed on the HMD based on the calculated position of the intersection point.

2. The HMD device according to claim 1, wherein
the first object is an external device,
the second object is a tip of a finger of the user, and
the event of the second object with respect to the first object comprises an operation of controlling the external device.

3. The HMD device according to claim 2, wherein
the first object is a keyboard, and
the event of the second object with respect to the first object comprises an operation of pressing a key of the keyboard.

4. The HMD device according to claim 1, wherein
the controller performs the eye gaze calibration based on a reference point located on the detected reference object, and
the reference point is a portion of the first object contacted by the second object to control the first object.

5. The HMD device according to claim 4, wherein
in a case in which the reference object is an electronic instrument,
the reference point comprises a control button of the electronic instrument, and
the event comprises an operation of controlling the control button of the electronic instrument.

6. The HMD device according to claim 5, wherein the control button of the electronic instrument comprises at least one selected from among a power button, volume control buttons, and channel control buttons.

7. The HMD device according to claim 4, wherein
in a case in which the reference object is a device comprising a touch sensitive display,
the reference point comprises a soft button displayed on the touch sensitive display.

8. The HMD device according to claim 1, wherein
in a case in which the first object is a pen,
the event of the second object with respect to the first object comprises a writing operation using the pen, and
the reference object is a tip of the pen.

9. The HMD device according to claim 1, further comprising:
a display unit configured to display a virtual object, wherein
the display unit controls a position of the displayed virtual object according to a result of the eye gaze calibration, and
the virtual object is a graphical user interface provided to the user by the display unit.

10. The HMD device according to claim 9, wherein the display unit displays the virtual object based on a position of the reference object using an augmented reality method.

11. The HMD device according to claim 9, wherein the display unit is a transparent optical display unit.

12. The HMD device according to claim 9, further comprising:
a distance measurement unit configured to measure a first distance from the HMD device to the detected reference object, wherein
the HMD device decides depth in which the virtual object is displayed based on the measured first distance.

13. The HMD device according to claim 12, wherein the distance measurement unit measures the first distance using at least one selected from among an ultrasonic sensor, a laser sensor, and an infrared sensor.

14. The HMD device according to claim 12, wherein the display unit provides a left eye and a right eye of the user with a left image and a right image, respectively, and expresses the depth of the virtual object using binocular disparity between the left image and the right image.

15. An eye gaze calibration method of an HMD device comprising:
sensing an image of surroundings located in front of the HMD device (10) using a camera unit (21);
detecting a reference object from the sensed image of the surroundings using an image processing unit (102);
detecting an eye gaze direction in which a user gazes at the detected reference object using an eye gaze detection unit (103); and
performing eye gaze calibration based on the detected reference object and the detected eye gaze direction using a controller (105),
wherein the step of detecting the reference object comprises:
detecting at least one object contained in the sensed image of the surroundings as a first object, the at least one object being a real object (11-1, 11-2) contained in the surroundings;
detecting a hand (21) of the user contained in the sensed image of the surroundings as a second object;
detecting an event of the second object with respect to the first object; and
deciding the first object, on which the event has been detected, as the reference object, wherein the step of performing eye gaze calibration comprises:
setting a virtual line (25) linking a pupil (13) of the user to the reference object and calculating an intersection point (24- 2) between the virtual line and the HMD, and
deciding a position of digital information to be displayed on the HMD based on the calculated position of the intersection point.

## Patentansprüche

1. Kopfmontierte Anzeigevorrichtung (HMD) (10) aufweisend:
eine Kameraeinheit (21), die konfiguriert ist, ein Bild einer Umgebung, die sich vor der HMD-Vorrichtung befindet, zu erfassen;
eine Bildverarbeitungseinheit (102), die konfiguriert ist, ein Referenzobjekt in dem erfassten Bild der Umgebung zu detektieren;
eine Blickdetektionseinheit (103), die konfiguriert eine Blickrichtung, in die ein Benutzer auf das detektierte Referenzobjekt blickt, zu detektieren; und
eine Steuerung (105), die konfiguriert ist, eine Blickkalibrierung auf Basis des detektierten Referenzobjekts und der detektierten Blickrichtung durchzuführen,
wobei die Bildverarbeitungseinheit konfiguriert ist, um:
mindestens ein Objekt, das in dem erfassten Bild der Umgebung enthalten ist, als ein erstes Objekt zu detektieren, wobei das mindestens eine Objekt ein in der Umgebung vorhandenes reales Objekt (11-1, 11-2) ist,
eine Hand (12) des Benutzers, die in dem erfassten Bild der Umgebung enthalten ist, als ein zweites Objekt zu detektieren,
ein Ereignis des zweiten Objekts mit Bezug auf das erste Objekt zu detektieren, und
das erste Objekt, an dem das Ereignis detektiert worden ist, als das Referenzobjekt zu bestimmen, und
wobei die Steuerung konfiguriert ist, um
eine virtuelle Linie (25), die eine Pupille (13) des Benutzers mit dem Referenzobjekt verbindet, zu setzen und einen Schnittpunkt (24-2) zwischen der virtuellen Linie und der HMD zu berechnen, und
auf Basis der berechneten Position des Schnittpunkts eine Position einer auf der HMD anzuzeigenden digitalen Information zu bestimmen.

2. HMD-Vorrichtung nach Anspruch 1, wobei
das erste Objekt eine externe Vorrichtung ist,
das zweite Objekt eine Fingerspitze des Benutzers ist, und
das Ereignis des zweiten Objekts mit Bezug auf das erste Objekt ein Steuern einer externen Vorrichtung aufweist.

3. HMD-Vorrichtung nach Anspruch 2, wobei
das erste Objekt eine Tastatur ist, und
das Ereignis des zweiten Objekts mit Bezug auf das erste Objekt ein Drücken einer Taste der Tastatur aufweist.

4. HMD-Vorrichtung nach Anspruch 1, wobei
die Steuerung die Blickkalibrierung auf Basis eines Referenzpunkts, der sich an dem detektierten Referenzobjekt befindet, durchführt, und
der Referenzpunkt ein Teil des ersten Objekts ist, der von dem zweiten Objekt kontaktiert wird, um das erste Objekt zu steuern.

5. HMD-Vorrichtung nach Anspruch 4, wobei
in einem Fall, dass das Referenzobjekt ein elektronisches Instrument ist, der Referenzpunkt eine Steuertaste des elektronischen Instruments aufweist und das Ereignis ein Steuern der Steuertaste des elektronischen Instruments aufweist.

6. HMD-Vorrichtung nach Anspruch 5, wobei die Steuertaste des elektronischen Instruments mindestens eine unter Einschalttaste, Lautstärkesteuerungstaste und Kanalsteuerungstaste ausgewählte Taste aufweist.

7. HMD-Vorrichtung nach Anspruch 4, wobei
in einem Fall, dass das Referenzobjekt eine Vorrichtung mit einem berührungsempfindlichen Anzeigebildschirm ist, der Referenzpunkt eine auf dem berührungsempfindlichen Anzeigebildschirm angezeigte Softbutton-Taste aufweist.

8. HMD-Vorrichtung nach Anspruch 1, wobei in einem Fall, dass das erste Objekt ein Schreibstift ist, das Ereignis des zweiten Objekts mit Bezug auf das erste Objekt ein Schreiben unter Verwendung des Schreibstifts aufweist und das Referenzobjekt eine Spitze des Schreibstifts ist.

9. HMD-Vorrichtung nach Anspruch 1, ferner aufweisend:
eine Anzeigeeinheit, die konfiguriert ist, ein virtuelles Objekt anzuzeigen, wobei die Anzeigeeinheit eine Position des angezeigten virtuellen Objekts gemäß einem Ergebnis der Blickkalibrierung steuert, und das virtuelle Objekt eine von der Anzeigeeinheit dem Benutzer bereitgestellte graphische Benutzerschnittstelle ist.

10. HMD-Vorrichtung nach Anspruch 9, wobei die Anzeigeeinheit das virtuelle Objekt auf Basis einer Position des Referenzobjekts unter Verwendung eines Erhöhte-Realität-Verfahrens anzeigt.

11. HMD-Vorrichtung nach Anspruch 9, wobei die Anzeigeeinheit eine transparente optische Anzeigeeinheit ist.

12. HMD-Vorrichtung nach Anspruch 9, ferner aufweisend:
eine Abstandsmessungseinheit, die konfiguriert ist, einen ersten Abstand von der HMD-Vorrichtung zu dem detektierten Referenzobjekt zu messen, wobei auf Basis des gemessenen ersten Abstands die HMD-Vorrichtung eine Tiefe bestimmt, in der das virtuelle Objekt angezeigt wird.

13. HMD-Vorrichtung nach Anspruch 12, wobei die Abstandsmessungseinheit unter Verwendung mindestens eines unter Ultraschallsensor, Lasersensor und Infrarotsensor ausgewählten Sensors den ersten Abstand misst.

14. HMD-Vorrichtung nach Anspruch 12, wobei die Anzeigeeinheit einem linken Auge bzw. einem rechten Auge des Benutzers ein linkes Bild bzw. ein rechtes Bild bereitstellt und die Tiefe des virtuellen Objekts unter Verwendung von binokularer Disparität zwischen dem linken Bild und dem rechten Bild ausdrückt.

15. Blickkalibrierungsverfahren einer HMD-Vorrichtung aufweisend:
Erfassen eines Bilds einer Umgebung, die sich vor der HMD-Vorrichtung (10) befindet, unter Verwendung einer Kameraeinheit (21);
Detektieren eines Referenzobjekts in dem erfassten Bild der Umgebung unter Verwendung einer Bildverarbeitungseinheit (102);
Detektieren einer Blickrichtung, in die ein Benutzer auf das detektierte Referenzobjekt blickt, unter Verwendung einer Blickdetektionseinheit (103); und
Durchführen einer Blickkalibrierung auf Basis des detektierten Referenzobjekts und der detektierten Blickrichtung unter Verwendung einer Steuerung (105),
wobei der Schritt zum Detektieren eines Referenzobjekts aufweist:
Detektieren mindestens eines Objekts, das in dem erfassten Bild der Umgebung enthalten ist, als ein erstes Objekt, wobei das mindestens eine Objekt ein in der Umgebung vorhandenes reales Objekt (11-1, 11-2) ist;
Detektieren einer Hand (12) des Benutzers, die in dem erfassten Bild der Umgebung enthalten ist, als ein zweites Objekt;
Detektieren eines Ereignisses des zweiten Objekts mit Bezug auf das erste Objekt; und
Bestimmen des ersten Objekts, an dem das Ereignis detektiert worden ist, als das Referenzobjekt, und
wobei der Schritt zum Durchführen einer Blickkalibrierung aufweist:
Setzen einer virtuellen Linie (25), die eine Pupille (13) des Benutzers mit dem Referenzobjekt verbindet, und Berechnen eines Schnittpunkts (24-2) zwischen der virtuellen Linie und der HMD, und
Bestimmen einer Position einer auf der HMD anzuzeigenden digitalen Information auf Basis der berechneten Position des Schnittpunkts.

## Revendications

1. Dispositif afficheur monté sur la tête (HMD, « head mounted display ») (10), comprenant :
une unité caméra (21) configurée pour capter une image d'environs situés devant le dispositif HMD ;
une unité de traitement d'image (102) configurée pour détecter un objet de référence à partir de l'image captée des environs ;
une unité de détection de regard (103) configurée pour détecter une direction de regard dans laquelle un utilisateur regarde l'objet de référence détecté ; et
un contrôleur (105) configuré pour effectuer un étalonnage de regard sur la base de l'objet de référence détecté et de la direction de regard détectée,
dans lequel l'unité de traitement d'image est configurée pour
détecter au moins un objet contenu dans l'image captée des environs en tant que premier objet, l'au moins un objet étant un objet réel (11-1, 11-2) contenu dans les environs,
détecter une main (12) de l'utilisateur contenue dans l'image captée des environs en tant que second objet,
détecter un événement du second objet par rapport au premier objet, et
décider que le premier objet, sur lequel l'événement a été détecté, est l'objet de référence, et
dans lequel le contrôleur est configuré pour ;
fixer une ligne virtuelle (25) reliant une pupille (13) de l'utilisateur à l'objet de référence et calculer un point d'intersection (24-2) entre la ligne virtuelle et le HMD, et
décider d'une position d'informations numériques à afficher sur le HMD sur la base de la position calculée du point d'intersection.

2. Dispositif HMD selon la revendication 1, dans lequel
le premier objet est un dispositif externe,
le second objet est un bout d'un doigt de l'utilisateur, et
l'événement du second objet par rapport au premier objet comprend une opération de commande du dispositif externe.

3. Dispositif HMD selon la revendication 2, dans lequel
le premier objet est un clavier, et
l'événement du second objet par rapport au premier objet comprend une opération de pression d'une touche du clavier.

4. Dispositif HMD selon la revendication 1, dans lequel
le contrôleur effectue l'étalonnage de regard sur la base d'un point de référence situé sur l'objet de référence détecté, et
le point de référence est une portion du premier objet touchée par le second objet pour commander le premier objet.

5. Dispositif HMD selon la revendication 4, dans lequel
au cas où l'objet de référence est un instrument électronique,
le point de référence comprend un bouton de commande de l'instrument électronique, et
l'événement comprend une opération de commande du bouton de commande de l'instrument électronique.

6. Dispositif HMD selon la revendication 5, dans lequel le bouton de commande de l'instrument électronique comprend au moins un bouton sélectionné parmi un bouton de mise en marche, des boutons de commande de volume, et des boutons de commande de canal.

7. Dispositif HMD selon la revendication 4, dans lequel
au cas où l'objet de référence est un dispositif comprenant un dispositif d'affichage tactile,
le point de référence comprend un bouton programmable affiché sur le dispositif d'affichage tactile.

8. Dispositif HMD selon la revendication 1, dans lequel
au cas où le premier objet est un stylo,
l'événement du second objet par rapport au premier objet comprend une opération d'écriture utilisant le stylo, et
l'objet de référence est une pointe du stylo.

9. Dispositif HMD selon la revendication 1, comprenant en outre :
une unité d'affichage configurée pour afficher un objet virtuel, dans lequel
l'unité d'affichage commande une position de l'objet virtuel affiché selon un résultat de l'étalonnage de regard, et
l'objet virtuel est une interface utilisateur graphique fournie à l'utilisateur par l'unité d'affichage.

10. Dispositif HMD selon la revendication 9, dans lequel l'unité d'affichage affiche l'objet virtuel sur la base d'une position de l'objet de référence en utilisant un procédé de réalité augmentée.

11. Dispositif HMD selon la revendication 9, dans lequel l'unité d'affichage est une unité d'affichage optique transparente.

12. Dispositif HMD selon la revendication 9, comprenant en outre :
une unité de mesure de distance configurée pour mesurer une première distance depuis le dispositif HMD jusqu'à l'objet de référence détecté, dans lequel
le dispositif HMD décide de la profondeur à laquelle l'objet virtuel est affiché sur la base de la première distance mesurée.

13. Dispositif HMD selon la revendication 12, dans lequel l'unité de mesure de distance mesure la première distance en utilisant au moins un capteur sélectionné parmi un capteur ultrasonique, un capteur laser, et un capteur infrarouge.

14. Dispositif HMD selon la revendication 12, dans lequel l'unité d'affichage fournit à un œil gauche et un œil droit de l'utilisateur une image gauche et une image droite, respectivement, et exprime la profondeur de l'objet virtuel en utilisant une disparité binoculaire entre l'image gauche et l'image droite.

15. Procédé d'étalonnage de regard d'un dispositif HMD, comprenant :
capter une image d'environs situés devant le dispositif HMD (10) en utilisant une unité caméra (21) ;
détecter un objet de référence à partir de l'image captée des environs en utilisant une unité de traitement d'image (102) ;
détecter une direction de regard dans laquelle un utilisateur regarde l'objet de référence détecté en utilisant une unité de détection de regard (103) ; et
effectuer un étalonnage de regard sur la base de l'objet de référence détecté et de la direction de regard détectée, en utilisant un contrôleur (105),
dans lequel l'étape de détection de l'objet de référence comprend :
détecter au moins un objet contenu dans l'image captée des environs en tant que premier objet, l'au moins un objet étant un objet réel (11-1, 11-2) contenu dans les environs ;
détecter une main (21) de l'utilisateur contenue dans l'image captée des environs en tant que second objet ;
détecter un événement du second objet par rapport au premier objet ; et
décider que le premier objet, sur lequel l'événement a été détecté, est l'objet de référence,
dans lequel l'étape d'effectuer un étalonnage de regard comprend :
fixer une ligne virtuelle (25) reliant une pupille (13) de l'utilisateur à l'objet de référence et calculer un point d'intersection (24-2) entre la ligne virtuelle et le HMD, et
décider d'une position d'informations numériques à afficher sur le HMD sur la base de la position calculée du point d'intersection.
